# DEMANDE DE BREVET EUROPEEN

(11) **EP 0 847 778 A1**
(43) Date de publication de la demande: **17.06.1998**
(21) Numéro de dépôt: 97402940.7
(22) Date de dépôt: 05.12.1997
(51) Int. Cl.: A62B 17/00, F16L 59/02

(54) **Dispositif de protection d'un abri technique mobile contre le flash nucléaire**

(30) Priorité: 12.12.1996 FR 9615253
(71) Demandeur: GIAT INDUSTRIES, 78000 Versailles (FR)
(72) Inventeur: Lucas, Didier, 35310 Chavagne (FR); Girre, Erik, 35170 Pontrean (FR)
(74) Mandataire: Célanie, Christian

(57) **Abrégé**

La présente invention concerne un dispositif de protection (6) d'un abri technique mobile contre le flash thermique d'une explosion nucléaire.

Il est constitué d'un panneau souple (1, 2) comprenant au moins un tissu synthétique (3) et un feutre (4) adapté sur les parois de l'abri par un système de fixation (7) à accrochage rapide, le panneau (2) comprenant une couche (3, 5) de tissu disposée de part et d'autre de la couche de feutre (4). Le tissu synthétique (3, 5) est obtenu à partir de polychlorure de vinyle ou d'enduit silicone.

Utilisation d'une bâche réalisée à partir d'un panneau pour la protection d'un abri technique mobile contre le flash thermique d'une explosion nucléaire.

## Description

Le secteur technique de la présente invention est celui des abris techniques mobiles destinés à contenir du matériel et/ou du personnel et susceptible d'être soumis à l'agression d'une explosion nucléaire.

Au cours d'une explosion nucléaire, deux phénomènes se cumulent dans le temps : le flash thermique et le souffle. Le flash atteint l'abri en premier et il s'agit d'une énergie sous forme de lumière et de chaleur. Le souffle se traduit par un effet mécanique sur le matériel. Lorsque l'on prend ces deux effets indépendamment l'un de l'autre, il est facile de les contrôler ; par contre, lorsqu'ils se cumulent ils deviennent très difficiles à maîtriser.

On sait que les abris réalisés à partir de panneaux sandwich, c'est-à-dire des panneaux constitués d'une âme organique ou non interposée entre deux peaux métalliques ou organiques et assemblées par collage, résistent convenablement au souffle nucléaire. Par contre, le flash provoque un échauffement de la peau extérieure à des températures pouvant atteindre 300 dégrés et plus, et lorsque le souffle atteint quelques dixièmes de secondes plus tard l'abri, la température du joint de colle est telle que la contrainte mécanique entraîne la destruction du panneau. On peut penser à plusieurs solutions pour résoudre ce problème. On pourrait utiliser des peaux en forte épaisseur pour diminuer la convection ou bien on pourrait utiliser des colles et des âmes ayant des tenues en température plus élevées.

Mais ces solutions sont incompatibles avec l'obtention d'un abri technique de faible masse et de coût réduit.

Le but de la présente invention est d'apporter une solution à ce problème posé ci-dessus, c'est-à-dire fournir une protection pour abri technique mobile efficace contre le flash nucléaire n'entraînant aucune augmentation de la masse et du coût de l'abri.

L'invention a donc pour objet un dispositif de protection d'un abri technique mobile contre le flash thermique d'une explosion nucléaire, caractérisé en ce qu'il est constitué d'un panneau souple comprenant au moins un tissu synthétique et un feutre résistant à la chaleur adapté sur les parois de l'abri par un système de fixation à accrochage rapide.

Le panneau peut comprendre une couche de tissu disposée de part et d'autre de la couche de feutre.

Le tissu synthétique est obtenu à partir de polychlorure de vinyle ou d'enduit silicone.

Le feutre est constitué de laine de roche, de verre ou de céramique d'épaisseur comprise entre 1 et 10 mm.

Le système de fixation est du type à sangle élastique, à crochets velours ou à boutons pression.

L'invention a également pour objet l'utilisation d'une bâche réalisée à partir d'un panneau comprenant un feutre résistant au feu adhérent à au moins une couche de tissu synthétique pour la protection d'un abri technique mobile contre le flash thermique d'une explosion nucléaire.

L'utilisation de la bâche est effectuée par fixation à l'aide d'un système de fixation du type crochets velours, boutons pression ou sangle élastique.

Un avantage de la présente invention réside dans la simplicité des moyens utilisés qui peuvent paraître surprenant eu égard au type d'agression en cause.

Un autre avantage de l'invention réside dans l'absence de modifications de la structure de l'abri.

Un autre avantage de l'invention réside dans le fait que la protection peut être rapportée uniquement en cas de menace d'agression.

Enfin, la bâche assure une protection vis-àvis du rayonnement solaire ambiant en diminuant le transfert thermique entre l'extérieur et l'intérieur de l'abri.

D'autres caractéristiques, avantages et résultats de l'invention apparaîtront plus clairement à la lecture du complément de description qui va suivre de modes de réalisation, donnés à titre d'exemple, en relation avec des dessins sur lesquels :
- la figure 1 est une coupe d'un premier mode de réalisation du dispositif de protection,
- la figure 2 est une coupe d'un second mode de réalisation,
- la figure 3 est une vue montrant la protection destinée à un abri.

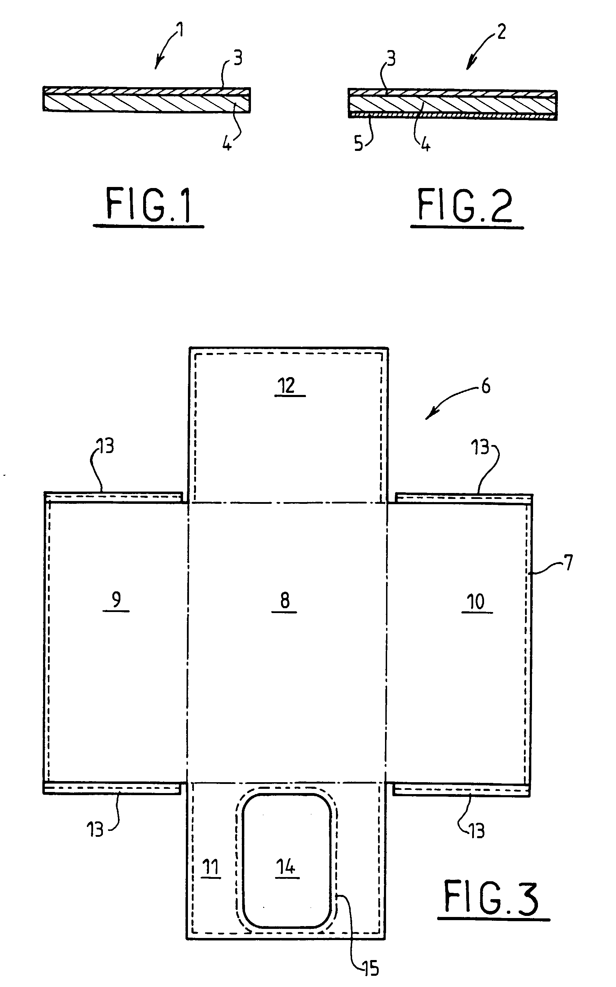

On a représenté sur les figures 1 et 2 des coupes transversales du dispositif de protection comprenant respectivement deux et trois couches constituant les complexes 1 et 2. Ces complexes se présentent sous la forme d'une bâche que l'on applique sur toute la surface de la paroi à protéger. Le complexe 1 comprend une couche 3 constituée par un tissu synthétique du type chlorure de polyvinyle ou enduit silicone, adhérent à une couche 4 constituée par un feutre résistant à la chaleur du type laine de verre ou de roche, ou céramique. La couche 3 est destinée principalement à maintenir la cohésion de la couche 4 qui elle assure la protection thermique. Ces deux couches sont collées entre elles à l'aide d'une colle polychlorure de vinyle ou polyuréthane. Le complexe 2 comprend outre les couches 3 et 4 précédentes une troisième couche 5 collée de la même manière à la couche 4. Ainsi, cette dernière est emprisonnée entre deux couches pour renforcer sa cohésion. La couche 5 est de même nature que la couche 3. Le complexe 1 ou 2 ainsi obtenu permet de protéger un abri pendant une attaque nucléaire sans modifier sa structure et de manière plus avantageuse sans prévoir une composition spécifique résistant au flash thermique pour réaliser les panneaux constituant l'abri. Ainsi par des moyens simples, on protège tout type de matériel contre le flash nucléaire. Cette manière simple de résoudre le problème est tout à fait surprenante par les résultats obtenus. On a simulé une explosion nucléaire à laquelle était soumis un abri protégé par une bâche suivant la figure 1 ou 2 et on a constaté que celle-ci était fortement endommagée, mais que par contre la paroi de l'abri exposée au flash ne comportait aucune trace d'agression.

Les tissus enduits PVC permettent de réaliser en outre une protection étanche à la pluie et de respecter les exigences militaires quant aux caractéristiques de peinture (infrarouge ou couleurs).

Le complexe 1 ou 2 peut être utilisé pour confectionner une bâche 6 conforme à la figure 3 comprenant une partie centrale 8 ou pavillon correspondant au toit de l'abri et quatre rabats 9, 10, 11, 12 respectivement la face latérale gauche, la face latérale droite, le pignon arrière et le pignon avant. Les faces latérales gauche 9 et droite 10 peuvent être munies d'ourlets 13 rabattables sur les pignons. La bâche 6 est reliée à l'abri protégé par un système de fixation 7 du type crochets velours, boutons pression ou sangle élastique. La bâche 6 peut être accrochée à demeure sur l'abri, mais elle peut être mise en place uniquement en cas de menace d'agression.

L'épaisseur et donc la masse de la bâche varient en fonction des matériaux constitutifs et de l'importance de l'agression. L'épaisseur de la couche 3 peut être de l'ordre du mm et celle de la couche 4 de 1 à 10 mm, avantageusement de 5 à 6 mm. La masse de la bâche est alors de 1 à 2 kg par m².

Le pignon arrière 11 est muni généralement d'une porte 14 qui elle aussi doit être protégée. Dans ce cas, on prévoit une découpe dans le rabat correspondant munie d'un moyen de fixation 15 sur l'abri, analogue aux précédents, et on adapte sur la porte proprement dite un panneau unique de bâche.

## Revendications

1. Dispositif de protection (6) d'un abri technique mobile contre le flash thermique d'une explosion nucléaire, caractérisé en ce qu'il est constitué d'un panneau souple (1, 2) comprenant au moins un tissu synthétique (3) et un feutre (4) adapté sur les parois de l'abri par un système de fixation (7) à accrochage rapide.

2. Dispositif de protection selon la revendication 1, caractérisé en ce que le panneau (2) comprend une couche (3, 5) de tissu disposée de part et d'autre de la couche de feutre (4).

3. Dispositif de protection selon la revendication 1 ou 2, caractérisé en ce que le tissu synthétique (3, 5) est obtenu à partir de polychlorure de vinyle ou d'enduit silicone.

4. Dispositif de protection selon l'une quelconque des revendications 1 à 3, caractérisé en ce que le feutre (4) est constitué de laine de roche, de verre ou de céramique d'épaisseur comprise entre 1 et 10 mm.

5. Dispositif de protection selon l'une quelconque des revendications 1 à 4, caractérisé en ce que le système de fixation (7) est du type à sangle élastique, à crochets velours ou à boutons pression.

6. Utilisation d'une bâche réalisée à partir d'un panneau comprenant un feutre résistant au feu adhérent à au moins une couche de tissu synthétique pour la protection d'un abri technique mobile contre le flash thermique d'une explosion nucléaire.

7. Utilisation d'une bâche selon la revendication 6, caractérisée en ce que la bâche est fixée sur l'abri par un système de fixation du type crochets velours, boutons pression ou sangle élastique.
